# EUROPEAN PATENT APPLICATION

(11) **EP 4 838 763 A1**
(43) Date of publication of application: **11.11.2026**
(21) Application number: 24915663.9
(22) Date of filing: 26.09.2024
(51) Int. Cl.: H02K 9/19

(54) **ROTATING ELECTRICAL MACHINE**

(30) Priority: 05.01.2024 JP 2024000645
(71) Applicant: Hitachi, Ltd., Tokyo 100-8280 (JP)
(72) Inventor: TAKAHATA, Ryouichi, Tokyo 100-8280 (JP); WANG, Zhi, Tokyo 100-8280 (JP); NAKATSUGAWA, Junnosuke, Tokyo 100-8280 (JP); FUJIMA, Yuri, Tokyo 100-8280 (JP); IWANO, Ryuuichirou, Tokyo 100-8280 (JP)
(74) Representative: MERH-IP Matias Erny Reichl Hoffmann Patentanwälte PartG mbB
(86) International application number: PCT/JP2024/034310
(87) International publication number: WO 2025/146740

(57) **Abstract**

Provided is a rotating electrical machine with ensured motor strength and improved cooling performance.

A rotating electrical machine 10 comprises: a stator 130; a rotor 150; a shaft 160 connected to the rotor 150; a rotor core 151 connected via a cylindrical rotor core holding section 155; and a plurality of permanent magnets 152 inserted into the rotor core 151. The shaft 160 has a first refrigerant flow path 161 and a communication hole 170 that communicates the first refrigerant flow path 161 and the rotor core holding section 155. The rotor core holding section 155 includes: a second refrigerant flow path 162 extending to the outer circumferential side of the rotor 150 through the communication hole 170; a third refrigerant flow path 163 branching in the circumferential direction of the rotor 150 from the second refrigerant flow path 162; a fourth refrigerant flow path 164 reaching the permanent magnets 152 from the third refrigerant flow path 163; and a fifth refrigerant flow path 165 extending along the permanent magnets 152 from the fourth refrigerant flow path 164.

## Description

### Technical Field

The present invention relates to a rotating electrical machine used in electric propulsion systems for mobility in general, such as aircraft, transportation equipment, and construction machinery.

### Background Art

In view of the recent trend toward CO₂ reduction, CO₂ emission regulations are strongly required in various countries toward the realization of a zero-carbon society. As an alternative to engines that use fossil fuels that emit CO₂, electrification that does not emit CO₂ during operation of a powertrain is being actively promoted. For all engine-driven mobility products, improvement in power density of future power electronics equipment is required.

Therefore, environmental resistance capable of handling all climates around the world and, in aircraft, capable of handling sudden changes in altitude is essential. At the same time, technical measures for improvement in cooling performance, higher voltage, weight reduction, higher speed, and the like are required.

Here, as a cooling method for a motor, there is an oil-cooling method having high cooling performance. This oil-cooling method circulates oil inside the motor and cools heat-generating portions such as permanent magnets, a rotor core, and coils of a stator. Since this oil-cooling method enables direct cooling of the heat-generating portions by providing flow paths, cooling performance can be improved, but on the other hand, the structure may become complicated in order to form the oil flow paths.

In PTL 1, a flywheel is formed between the output side of a motor and an output shaft, and a fixing pin for fixing a core member of the motor and a flow path for supplying oil to the inside of the fixing pin are provided for the flywheel. That is, PTL 1 has a configuration for cooling a rotor core and permanent magnets, and aims to provide a motor having high cooling performance.

In addition, in PTL 2, a flow path provided along the central axis of a shaft, a through flow path provided in a portion where a rotor core and the shaft are connected in a direction perpendicular to a shaft axis, and a flow path provided through the rotor core along the inner side surface of permanent magnets are connected to each other, thereby forming this series of through flow paths. An oil pump supplies cooling oil to the flow paths, so that the rotor core and the permanent magnets are cooled. That is, similarly to PTL 1, PTL 2 aims to provide a motor having high cooling performance.

### Citation List

### Patent Literature

PTL 1: JP 2009-261214 A
PTL 2: JP 2003-324901 A

### Summary of Invention

### Technical Problem

However, in the above conventional techniques, since a flow path penetrating a motor fixing member is provided and refrigerant oil flows through the flow path, there is a problem that a structure is complicated and difficult to process. Furthermore, in a motor for an aircraft, the rotational speed is high and load torque is also large, and thus when a plurality of through holes are present in the motor fixing member, motor strength may decrease, resulting in a failure of an electric system.

An object of the present invention is to provide a rotating electrical machine with ensured motor strength and improved cooling performance and an electric aircraft equipped with this rotating electrical machine by employing a simple cooling structure that is easy to process.

### Solution to Problem

The present invention is configured as follows in order to achieve the above object.

A rotating electrical machine includes: a stator having a cylindrical stator core and a coil mounted on the stator core; a shaft rotatably provided inside a housing; and a rotor having a rotor core connected via a cylindrical rotor core holding section centered on the shaft and a plurality of permanent magnets inserted into the rotor core, the rotor being disposed with a gap from the stator, in which the shaft includes: a first refrigerant flow path through which a refrigerant flows; and a communication hole that communicates the first refrigerant flow path and the rotor core holding section, and the rotor core holding section includes: a second refrigerant flow path that communicates with the first refrigerant flow path through the communication hole, is provided on a surface of the rotor core holding section, and extends to a radial outer circumferential side of the rotor; a third refrigerant flow path that communicates with the second refrigerant flow path, is provided on the surface of the rotor core holding section, and branches in a circumferential direction of the rotor from the second refrigerant flow path; a fourth refrigerant flow path that extends to the radial outer circumferential side of the rotor from the third refrigerant flow path and reaches the permanent magnets; and a fifth refrigerant flow path that extends along the permanent magnets from the fourth refrigerant flow path.

Furthermore, an electric aircraft is equipped with the above rotating electrical machine.

### Advantageous Effects of Invention

According to the present invention, by providing simple grooves and flow paths that are easy to process in a rotor core holding section of a motor, a rotating electrical machine with ensured motor strength and improved cooling performance and an electric aircraft equipped with this rotating electrical machine can be provided.

Problems, configurations, and effects other than those described above will be clarified by the following description of embodiments.

### Brief Description of Drawings

[FIG. 1] FIG. 1 is a schematic plan view of an electric aircraft including a rotating electrical machine according to Example 1 as viewed from above.
[FIG. 2A] FIG. 2A is a schematic diagram illustrating a part of a cooling circuit of the rotating electrical machine according to Example 1.
[FIG. 2B] FIG. 2B is a schematic diagram illustrating a part of the cooling circuit of the rotating electrical machine according to Example 1.
[FIG. 2C] FIG. 2C is a schematic diagram illustrating a part of the cooling circuit of the rotating electrical machine according to Example 1.
[FIG. 3] FIG. 3 is a schematic cross-sectional view of the rotating electrical machine according to Example 1 as viewed directly from the side.
[FIG. 4] FIG. 4 is a schematic plan view of a rotor of the rotating electrical machine according to Example 1 as viewed directly from above in an axial direction.
[FIG. 5] FIG. 5 is a schematic cross-sectional view of a part of the rotor of the rotating electrical machine according to Example 1 as viewed directly from the side.
[FIG. 6] FIG. 6 is a schematic cross-sectional view of a part of the rotor of the rotating electrical machine according to Example 1 as viewed directly from the side in a radial direction.
[FIG. 7] FIG. 7 is a partially cutaway schematic plan view of the rotor of the rotating electrical machine according to Example 1 as viewed directly from above in the axial direction.
[FIG. 8] FIG. 8 is a schematic plan view of a rotor of a rotating electrical machine according to Example 2 as viewed directly from above in the axial direction.
[FIG. 9] FIG. 9 is a schematic cross-sectional view of a part of a rotor of a rotating electrical machine according to Example 3 as viewed directly from the side.

### Description of Embodiments

Hereinafter, embodiments of the present invention will be described in detail with appropriate reference to the drawings.

### Examples

### <Example 1>

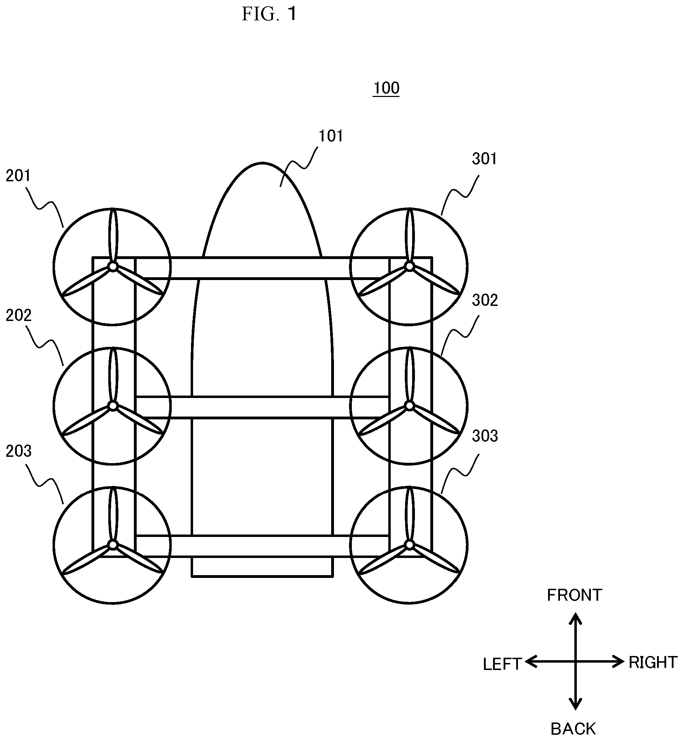

With reference to FIGS. 1 to 6, a rotating electrical machine (motor) according to Example 1 of the present invention will be described.

FIG. 1 is a schematic plan view of an electric aircraft 100 including a motor according to Example 1 of the present invention as viewed from above.

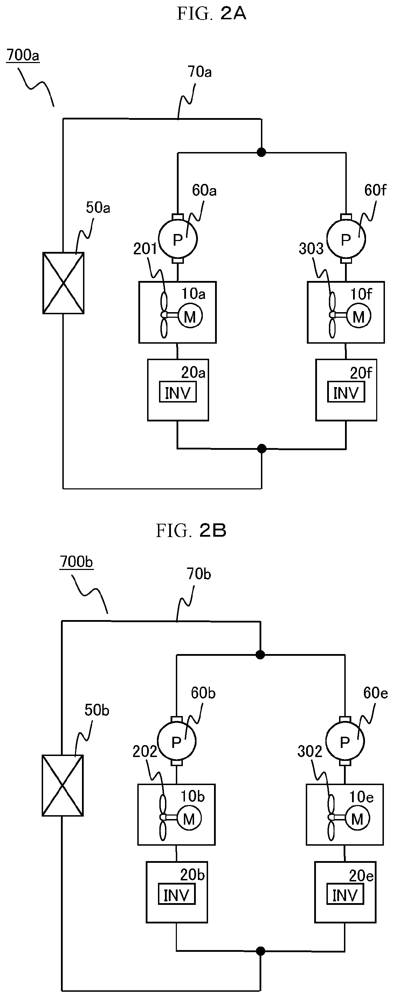

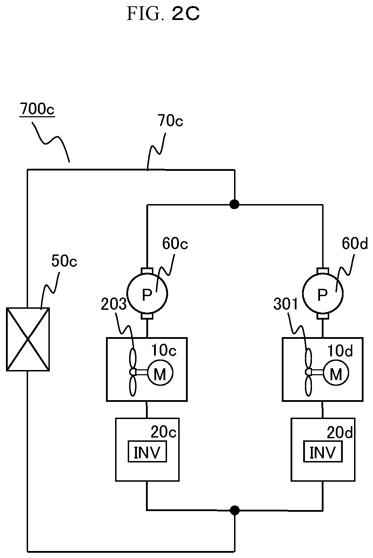

In Example 1, the electric aircraft 100 that generates thrust with propeller rotors 201 to 203 and 301 to 303 by using a motor 10 (see FIG. 2) that rotates propellers and an inverter 20 (see FIG. 2) that supplies electric power to the motor 10 is assumed.

FIG. 2 illustrates a schematic diagram showing a part of a cooling circuit, such as a motor (rotating electrical machine) 10 and an inverter 20 according to a first embodiment of the present invention.

As illustrated in FIG. 1, the electric aircraft 100 drives propellers 201 to 203 and 301 to 303 using the inverter 20 (see FIG. 2) that supplies electric power to the motor 10, and generates thrust. In addition, as illustrated in FIG. 1, the electric aircraft 100 includes a fuselage (airframe) 101, propellers 201, 202, and 203 on the left side of the fuselage 101, and propellers 301, 302, and 303 on the right side of the fuselage 101.

An electric system (power component) for driving the left-side propellers 201 to 203 and the right-side propellers 301 to 303 includes motors 10 (10a to 10f) and inverters 20 (20a to 20f). The inverters 20 (20a to 20f) convert DC electric power of a power supply into AC electric power and supply drive current to the motors 10 (10a to 10f).

The inverter 20 has a plurality of power semiconductor elements (not illustrated) and a control circuit (not illustrated) that controls the power semiconductor elements. The inverter 20 is connected to a power storage device (not illustrated) of the power supply. The inverter 20 converts DC electric power from the power storage device into AC electric power suitable for the motors 10 (10a to 10f).

The power storage device is configured by, for example, a capacitor or a secondary battery such as a lithium-ion battery or a nickel-metal hydride battery. Transmission and reception of electric power between the power storage device and the motor 10 are performed through the inverter 20.

Rotational torque generated by the motor 10 is transmitted to the propellers 201, 202, 203, 301, 302, and 303 through a speed reducer (not illustrated) and a differential device (not illustrated). As a result, the propellers 201, 202, 203, 301, 302, and 303 of the electric aircraft 100 illustrated in FIG. 1 rotate, and the airframe (fuselage 101) cruises.

The inverters 20 (20a to 20f) illustrated in FIGS. 2A to 2C control the motors 10 (10a to 10f) on the basis of a torque command from an integrated control device (not illustrated) so that a torque output or generated electric power is produced in accordance with the command.

The control circuit of the inverter 20 controls switching operations of the power semiconductor elements on the basis of a command from the integrated control device (not illustrated). By the switching operations of the power semiconductor elements, the motor 10 is operated as an electric motor.

When the motor 10 is operated as an electric motor, DC electric power from the power storage device is supplied to DC terminals of the inverter 20. The control circuit of the inverter 20 controls the switching operations of the power semiconductor elements to convert DC electric power into three-phase AC electric power and supplies the three-phase AC electric power to the motor 10. Note that the motor 10 according to Example 1 is an interior permanent magnet three-phase synchronous electric motor.

Further, as illustrated in FIGS. 2A to 2C, the electric system according to the present invention operates in conjunction with an electrical system and a mechanical system, and constitutes cooling systems 700a, 700b, and 700c together with paired propellers 201 and 301, paired propellers 202 and 302, and paired propellers 203 and 303.

The cooling system 700a having an operating mechanism of the left-side propeller 201 and an operating mechanism of the right-side propeller 303 illustrated in FIG. 2A has a radiator 50a for cooling the left-side motor 10a and the left-side inverter 20a, and the right-side motor 10f and the right-side inverter 20f.

The cooling system 700b having an operating mechanism of the left-side propeller 202 and an operating mechanism of the right-side propeller 302 illustrated in FIG. 2B has a radiator 50b for cooling the left-side motor 10b and the left-side inverter 20b, and the right-side motor 10e and the right-side inverter 20e.

The cooling system 700c having an operating mechanism of the left-side propeller 203 and an operating mechanism of the right-side propeller 301 illustrated in FIG. 2C has a radiator 50c for cooling the left-side motor 10c and the left-side inverter 20c, and the right-side motor 10d and the right-side inverter 20d.

With the above-described configuration, the cooling systems 700a, 700b, and 700c include refrigerant pipes 70a to 70c through which a refrigerant that cools the plurality of motors 10a to 10f and the plurality of inverters 20a to 20f flows, pumps 60a to 60f connected to the refrigerant pipes 70a to 70c and pumping the refrigerant, and the radiators 50a to 50c connected to the refrigerant pipes 70a to 70c and dissipating heat from the refrigerant, thereby providing simple and lightweight cooling systems.

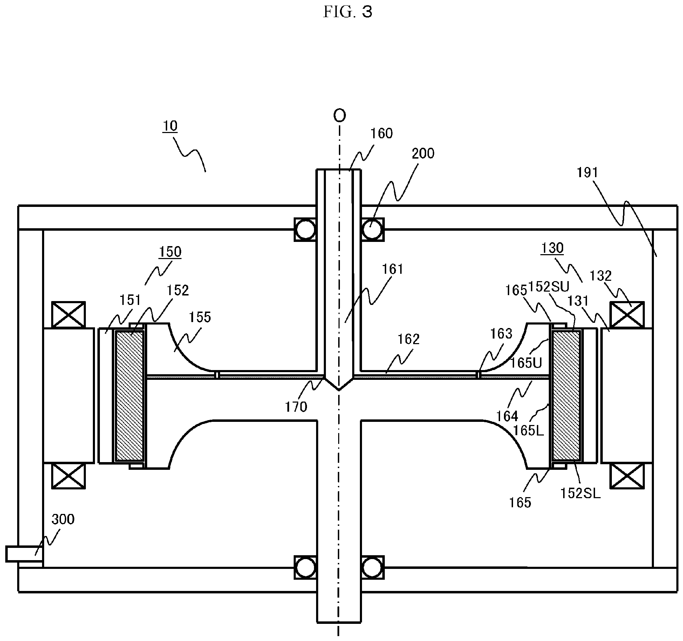

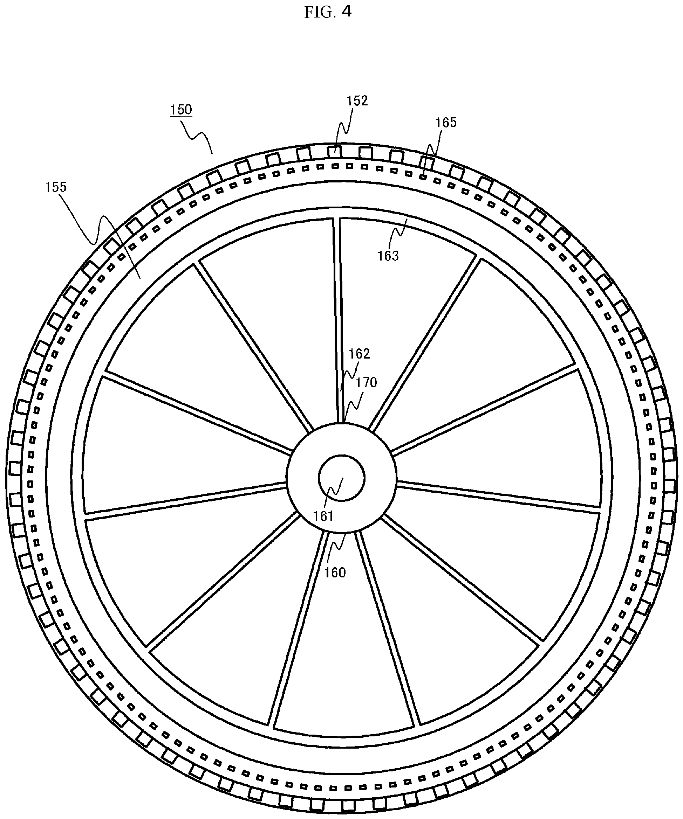

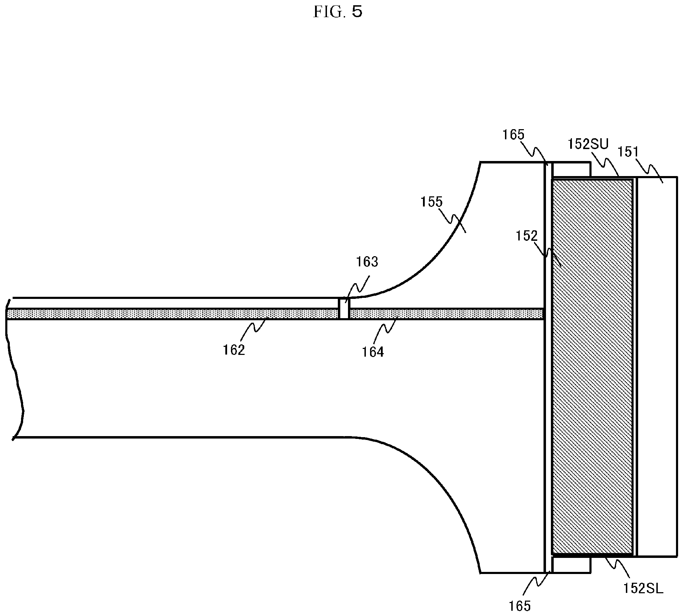

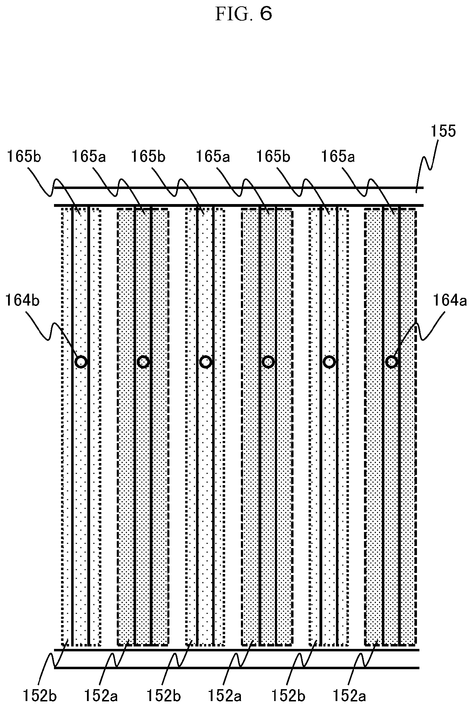

FIG. 3 is a schematic cross-sectional view of the motor 10 according to Example 1 as viewed directly from the side, and FIG. 4 is a schematic plan view of a rotor 150 of the motor according to Example 1 as viewed directly from above in an axial direction of a shaft 160. FIG. 5 is a schematic cross-sectional view of a part of the rotor 150 of the motor 10 according to Example 1 as viewed directly from the side, and FIG. 6 is a schematic cross-sectional view of a part of the rotor 150 of the motor 10 according to Example 1 as viewed directly from the side in a radial direction.

As illustrated in FIG. 3, the motor 10 has a cylindrical stator 130 fixed to a housing 191, the cylindrical rotor 150 rotatably disposed with a gap from the stator 130, and the shaft 160 connected to the rotor 150. The rotor 150 is disposed on the inner circumferential side of the stator 130.

In the present specification, "axial direction", "circumferential direction", and "radial direction" are as follows. The "axial direction" is a direction along a rotation center axis (hereinafter also referred to as a rotation axis) O (illustrated in FIG. 3) of the rotor 150. The "circumferential direction" is a direction along the rotation direction of the rotor 150, that is, a circumferential direction around the rotation axis O. The "radial direction" is a direction orthogonal to the rotation axis O, that is, the radial direction of a circle around the rotation axis O. In addition, the "inner circumferential side" refers to a radially inner side, and the "outer circumferential side" refers to the opposite direction thereof, that is, a radially outer side.

The stator 130 has a cylindrical stator core 131 and coils 132 mounted on the stator core 131. The stator core 131 is formed by, for example, stacking a plurality of annular electromagnetic steel sheets. The stator core 131 is fitted and fixed inside the housing 191.

A plurality of slots (72 slots in the present Example 1) parallel to the central axis direction of the stator core 131 are formed in the inner circumferential portion of the stator core 131. Teeth are formed between the slots. The slots are parallel slots having side surfaces parallel to each other along the radial direction of the stator core 131. That is, the slots have a constant circumferential width from the outer circumferential end to tips of the teeth. A plurality of phase windings of a U phase, a V phase, and a W phase that constitute the coils 132 are arranged in the slots. The plurality of slots are formed at equal intervals in the circumferential direction of the stator core 131.

The plurality of teeth are formed so as to protrude from an annular core back toward the rotation axis O. The teeth form magnetic paths in the radial direction, and the core back forms a magnetic path in the circumferential direction. The teeth guide a rotating magnetic field generated by the coils 132 to the rotor 150, and cause rotational torque to be generated in the rotor 150.

Furthermore, as illustrated in FIG. 3, the rotor 150 includes a rotor core 151, a plurality of permanent magnets 152 fixed to the rotor core 151, and a cylindrical rotor core holding section 155.

The shaft 160 is fixed to a through hole of the rotor core holding section 155 by press-fitting or shrink-fitting. As illustrated in FIG. 3, the shaft 160 is supported by a plurality of bearings 200 provided in the housing 191, so that the rotor 150 is rotatably held inside the stator core 131.

As illustrated in FIGS. 3 and 4, the rotor core 151 is formed by, for example, stacking a plurality of annular electromagnetic steel sheets. The permanent magnets 152 form field poles of the rotor 150. As the permanent magnets 152, neodymium-based sintered magnets, samarium-based sintered magnets, ferrite magnets, neodymium-based bonded magnets, and the like can be used.

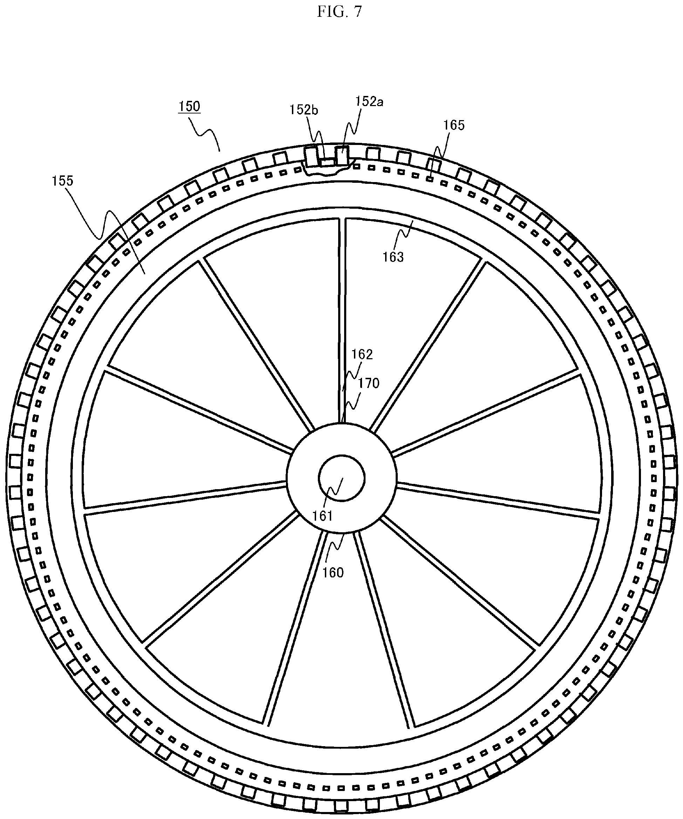

Rectangular parallelepiped magnet insertion holes are formed in the rotor core 151 at equal intervals in the circumferential direction in the vicinity of the outer circumferential portion. The permanent magnet 152 is embedded in each magnet insertion hole and is fixed with an adhesive or the like. In the present Example 1, as illustrated in FIG. 7, I-shaped permanent magnets 152a extending in the radial direction and straight-line-shaped permanent magnets 152b extending in the circumferential direction are alternately arranged to form a Halbach array (66 poles in the present Example 1). As a result, torque of the motor is improved. In FIGS. 3, 4, and 5, the permanent magnets 152a and the permanent magnets 152b are illustrated in a simplified manner as the permanent magnets 152 for convenience of illustration.

Further, the rotor core holding section 155 has an annular shape and is attached together with the rotor core 151 so as to close a part of the magnet insertion holes. The rotor core 151 and the permanent magnets 152 are pressed in the axial direction by this rotor core holding section 155, and positions in the axial direction are regulated. Aluminum or the like can be used for the rotor core holding section 155.

Furthermore, as illustrated in FIGS. 3 and 4, the shaft 160 is a cylindrical member extending along the axial direction and has a flow path (hereinafter also referred to as a first refrigerant flow path) 161 through which oil as a refrigerant flows inside. That is, a plurality of communication holes 170 that communicate the first refrigerant flow path 161 and the outside of the shaft 160 are formed in the shaft 160. This communication hole 170 is connected to (hereinafter referred to as a second refrigerant flow path) 162 provided on the surface of the rotor core holding section 155 and extending to the radial outer circumferential side of the rotor 150. The second refrigerant flow path 162 communicates with the first refrigerant flow path 161 through the communication hole 170. The dimensions, width, and shape of the first refrigerant flow path 161 are determined on the basis of the flow rate of the refrigerant to be used and a pressure loss.

In addition, as illustrated in FIGS. 4 and 5, this second refrigerant flow path 162 is connected to a groove (hereinafter referred to as a third refrigerant flow path) 163 formed by branching in the vicinity of the outer circumferential portion of the magnet insertion holes and in the vicinity of an arc portion of the rotor core holding section 155. The third refrigerant flow path 163 communicates with the second refrigerant flow path 162 and branches in the circumferential direction of the rotor 150 from the second refrigerant flow path 162. This third refrigerant flow path 163 that branches in the circumferential direction makes it possible to make the number of second refrigerant flow paths 162 extending in the radial direction smaller than the number of permanent magnets 152 and enables rotor strength to be ensured. The number of third refrigerant flow paths 163 is also smaller than the number of permanent magnets 152.

As illustrated in FIG. 6, the permanent magnets 152a and 152b are alternately arranged, a fifth refrigerant flow path 165a connected to a fourth refrigerant flow path 164a is disposed in the permanent magnet 152a, and the fifth refrigerant flow path 165b connected to the fourth refrigerant flow path 164b is disposed in the permanent magnet 152b.

Furthermore, the number of second refrigerant flow paths 162 is determined in view of the number of poles of the permanent magnets 152 in the present invention and the influence of groove dimensions and pressure loss. However, the number may be changed as appropriate in accordance with operating conditions (required specifications and required output), and similar effects are obtained. Further, the dimensions, width, and shape of the second refrigerant flow path 162 are determined on the basis of the flow rate of the refrigerant to be used and pressure loss.

Furthermore, as illustrated in FIGS. 4 and 5, this third refrigerant flow path 163 is connected to a through hole, namely a fourth refrigerant flow path 164, extending to a substantially axial central portion of the plurality of magnet insertion holes arranged in the circumferential direction. The dimensions, width, and shape of the third refrigerant flow path 163 are determined on the basis of the flow rate of the refrigerant to be used and pressure loss.

The fourth refrigerant flow path 164 extends to the radial outer circumferential side of the rotor 150 from the third refrigerant flow path 163 and reaches the permanent magnets 152. In addition, the fourth refrigerant flow path 164 is connected to a fifth refrigerant flow path 165 extending along the permanent magnets 152. The fifth refrigerant flow path 165 has an upper refrigerant flow path 165U extending from a connection portion with the fourth refrigerant flow path 164 to the upper surface portion of the permanent magnets 152, and a lower refrigerant flow path 165L extending to the lower surface portion of the permanent magnets 152. In addition, the fifth refrigerant flow path 165 not only branches upward and downward, but also has an upper surface portion flow path 152SU formed in the upper surface portion of the permanent magnets 152, a lower surface portion flow path 152SL formed in the lower surface portion of the permanent magnets 152, and a flow path extending in the axial direction of the rotor core 151 of the permanent magnets 152. The fifth refrigerant flow path 165 makes it possible to increase the area for cooling the permanent magnets 152 and improve a cooling effect. Opening portions opened in the vertical direction (axial direction) are formed in the fifth refrigerant flow path 165, and the refrigerant is discharged from the opening portions, discharged from an oil discharge hole 300, and circulated through a refrigerant pipe 70a. The dimensions, widths, and shapes of the fourth refrigerant flow path 164 and the fifth refrigerant flow path 165 are determined on the basis of the flow rate of the refrigerant to be used and pressure loss.

As illustrated in FIGS. 5 and 6, in the fifth refrigerant flow paths 165a and 165b, oil guided from the shaft 160 through the refrigerant flow paths is directly applied to the I-shaped permanent magnets 152a and the straight-line-shaped permanent magnets 152b, so that cooling performance can be improved. Further, the widths of the fifth refrigerant flow paths 165a and 165b are set to the same dimensions and widths in the upper and lower branches in view of the influence of pressure loss. However, the dimensions and widths of both may be changed as appropriate in accordance with operating conditions (required specifications and required output), and similar effects are obtained.

With the above-described configuration, the number of grooves and through holes in the rotor core holding section 155 is reduced as much as possible, and therefore rotor strength can be ensured even when the motor 10 is driven at a high rotational speed.

Therefore, according to Example 1 of the present invention, a simple cooling structure that is easy to process can be obtained, and a rotating electrical machine capable of ensuring motor strength and improving cooling performance and an electric aircraft equipped with this rotating electrical machine can be provided.

### <Example 2>

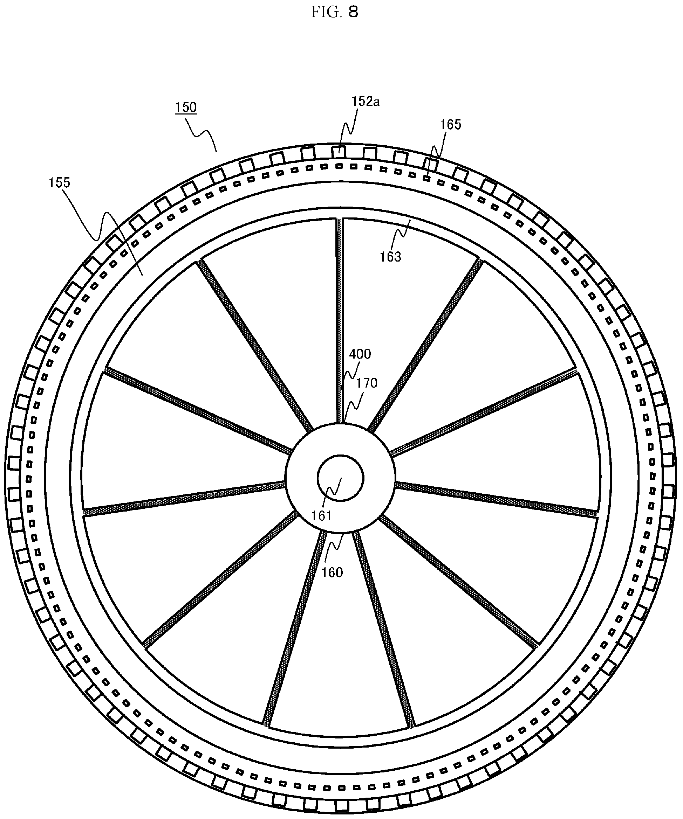

With reference to FIG. 8, a motor 10 according to Example 2 of the present invention will be described. Note that in FIG. 8, the same reference signs denote portions that are the same as or correspond to those in Example 1, and differences will be described.

FIG. 8 is a schematic plan view of the rotor 150 of the motor 10 according to Example 2 as viewed directly from above in the axial direction.

In Example 2, surface grooves of the second refrigerant flow path 162 and the third refrigerant flow path 163 are piping flow paths 400 covered with a resin material such as a rubber packing material. This makes it possible to guide oil from the first refrigerant flow path 161 and the communication hole 170 to the outer circumferential side by a centrifugal effect of the rotor 150, further reduce the number of machined grooves in the rotor core holding section 155, and improve sealing performance, so that refrigerant oil can be guided more efficiently to the rotor core 151 and the permanent magnets 152, and motor strength can be ensured and cooling performance can be improved.

Note that the piping passage 400 of the rubber packing may be used in a state of extending partway without extending to the third refrigerant flow path 163.

According to Example 2, the same effect density as in Example 1 can be obtained, and the above-described effects can also be obtained.

### <Example 3>

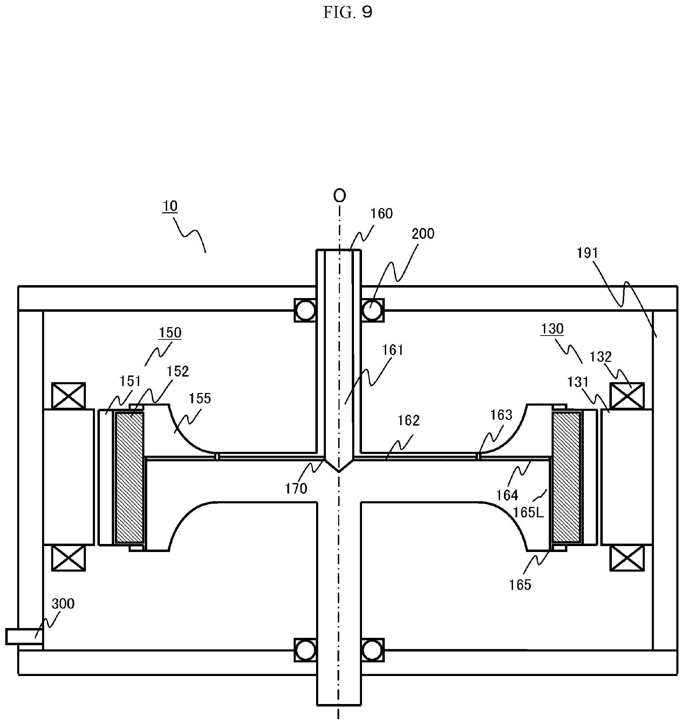

With reference to FIG. 9, a motor 10 according to Example 3 of the present invention will be described. Note that, in FIG. 9, the same reference signs denote portions that are the same as or correspond to those in Example 1, and differences will be described.

FIG. 9 is a schematic cross-sectional view of a part of a rotor of a rotating electrical machine according to Example 3 as viewed directly from the side.

Differences between Example 3 illustrated in FIG. 9 and Example 1 illustrated in FIG. 3 will be described. In Example 1 illustrated in FIG. 3, the fifth refrigerant flow path 165 branches from the fourth refrigerant flow path 164 in both directions (vertical direction in FIG. 9), whereas in Example 3 illustrated in FIG. 9, the refrigerant flow path 165 extends from the fourth refrigerant flow path 164 in one direction (downward direction in FIG. 9). That is, the refrigerant flow path 165 has the lower refrigerant flow path 165L but does not have the upper refrigerant flow path 165U. Other configurations are similar to the example illustrated in FIG. 3.

When the motor 10 is applied to the electric aircraft 100, the refrigerant is less likely to flow upward than downward. Therefore, by employing a configuration extending from the fourth refrigerant flow path 164 in one direction, the circulation speed of the refrigerant increases, and a cooling effect can be improved.

In Example 3 as well, effects similar to those of Example 1 can be obtained.

### <Modified Example of Example 3>

In Example 3, the refrigerant flow path 165 extends from the fourth refrigerant flow path 164 in one direction.

In a modified example of Example 3, similarly to Example 1, the fifth refrigerant flow path 165 has the upper refrigerant flow path 165U and the lower refrigerant flow path 165L, but the diameter of the lower refrigerant flow path 165L is set larger than the diameter of the upper refrigerant flow path 165U.

When the motor 10 is applied to the electric aircraft 100, the refrigerant is less likely to flow upward than downward. Therefore, with the above configuration, the circulation speed of the refrigerant increases, and a cooling effect can be improved.

In a modified example to Example 3 as well, effects similar to those of Example 3 can be obtained.

Although the Examples of the present invention have been described above, the above Examples merely show some application examples of the present invention and are not intended to limit the technical scope of the present invention to the specific configurations of the above Examples.

The present invention is not limited to the configurations of the above-described Examples, and various modifications and specific examples are possible within the scope of the appended claims.

### Reference Signs List

10 (10a, 10b, 10c, 10d) motor (rotating electrical machine)
20 (20a, 20b, 20c, 20d, 20e, 20f) inverter
50 (50a, 50b, 50c) radiator
60 pump
70 refrigerant pipe
100 electric aircraft
101 conductor
130 Stator
131 stator core
132 coil
150 rotor
151 rotor core
152 (152a, 152b) permanent magnet
152SU upper surface portion flow path
152SL lower surface portion flow path
155 rotor core holding section
160 shaft
161 first refrigerant flow path
162 second refrigerant flow path
163 third refrigerant flow path
164 fourth refrigerant flow path
165 fifth refrigerant flow path
165L lower refrigerant flow path
165U upper refrigerant flow path
170 communication hole
191 housing
200 bearing
201, 202, 203, 301, 302, 303 propeller
300 oil discharge port
400 piping flow path of rubber packing material
700 (700a, 700b, 700c) cooling system

## Claims

1. A rotating electrical machine comprising:
a stator having a cylindrical stator core and a coil mounted on the stator core;
a shaft rotatably provided inside a housing; and
a rotor having a rotor core connected via a cylindrical rotor core holding section centered on the shaft and a plurality of permanent magnets inserted into the rotor core, the rotor being disposed with a gap from the stator,
wherein
the shaft includes:
a first refrigerant flow path through which a refrigerant flows, and
a communication hole that communicates the first refrigerant flow path and the rotor core holding section, and
the rotor core holding section includes:
a second refrigerant flow path that communicates with the first refrigerant flow path through the communication hole, is provided on a surface of the rotor core holding section, and extends to a radial outer circumferential side of the rotor,
a third refrigerant flow path that communicates with the second refrigerant flow path, is provided on the surface of the rotor core holding section, and branches in a circumferential direction of the rotor from the second refrigerant flow path,
a fourth refrigerant flow path that extends to the radial outer circumferential side of the rotor from the third refrigerant flow path and reaches the permanent magnets, and
a fifth refrigerant flow path that extends along the permanent magnets from the fourth refrigerant flow path.

2. The rotating electrical machine according to claim 1, wherein
a number of the second refrigerant flow paths and a number of the third refrigerant flow paths are smaller than a number of the permanent magnets.

3. The rotating electrical machine according to claim 1, wherein
dimensions, widths, and shapes of the first refrigerant flow path, the second refrigerant flow path, the third refrigerant flow path, the fourth refrigerant flow path, and the fifth refrigerant flow path are determined on a basis of a flow rate of a refrigerant to be used and pressure loss.

4. The rotating electrical machine according to claim 1, wherein
the second refrigerant flow path is covered with a resin material.

5. The rotating electrical machine according to claim 1, wherein
the fifth refrigerant flow path includes an upper refrigerant flow path that branches from the fourth refrigerant flow path and extends to an upper surface portion of the permanent magnets, and a lower refrigerant flow path that extends to a lower surface portion of the permanent magnets.

6. The rotating electrical machine according to claim 1, wherein
the fifth refrigerant flow path includes a lower refrigerant flow path that extends from the fourth refrigerant flow path to a lower surface portion of the permanent magnets.

7. The rotating electrical machine according to claim 5, wherein
a diameter of the lower refrigerant flow path is larger than a diameter of the upper refrigerant flow path.

8. An electric aircraft equipped with the rotating electrical machine according to any one of claims 1 to 7.

9. The electric aircraft according to claim 8, comprising:
a plurality of propellers rotated by a plurality of the rotating electrical machines;
a power converter that supplies electric power to the plurality of rotating electrical machines;
a plurality of refrigerant pipes through which a refrigerant for cooling a plurality of the rotating electrical machines and a plurality of the power converters flows;
a plurality of pumps connected to the plurality of refrigerant pipes and pumping the refrigerant; and
a plurality of radiators connected to the plurality of refrigerant pipes and dissipating heat from the refrigerant.
